# EUROPEAN PATENT SPECIFICATION

(11) **EP 2 507 042 B1**
(45) Date of publication and mention of the grant of the patent: **12.02.2014**
(21) Application number: 10813014.7
(22) Date of filing: 03.12.2010
(51) Int. Cl.: B29C 70/52, B29C 53/30, B29C 59/02, E21D 21/00

(54) **METHOD AND PLANT FOR PRODUCING A FIBERGLASS PROFILE TO BE USED AS REINFORCING ELEMENT FOR STRENGTHENING AN EXCAVATION WALL**
VERFAHREN UND ANLAGE ZUR HERSTELLUNG EINES GLASFASERPROFILS ALS VERSTÄRKUNGSELEMENT ZUR STÄRKUNG EINER AUSHUBWAND
PROCÉDÉ ET USINE DE FABRICATION DE PROFIL DE FIBRE DE VERRE À UTILISER EN TANT QU'ÉLÉMENT DE RENFORT POUR RENFORCER UNE PAROI D'EXCAVATION

(30) Priority: 03.12.2009 WO PCT/IT2009/000544
(43) Date of publication of application: 10.10.2012
(73) Proprietor: Elas Geotecnica S.r.l., 20090 Segrate (IT)
(72) Inventor: BONOMI, Cristiano, I-20068 Peschiera Borromeo (Milano) (IT); FRULLANI, Antonio, I-55042 Forte dei Marmi (Lucca) (IT)
(74) Representative: Provvisionato, Paolo
(86) International application number: PCT/IB2010/055577
(87) International publication number: WO 2011/067738

(56) References cited:
- EP-A1- 0 667 228
- GB-A- 1 117 021

## Description

### FIELD OF THE INVENTION

The present invention falls within the scope of production of reinforcing elements for strengthening the excavation face of a tunnel. More precisely, the present invention relates to a fiberglass profile with greater properties of pullout strength than those of conventional profiles used for the same purpose. The present invention also relates to a method for producing this fiberglass profile through a limited number of steps at relatively limited costs. The present invention also relates to a plant for implementing the method, i.e for producing the fiberglass profile according to the invention.

### STATE OF THE ART

As it is known in the field of strengthening tunnel excavation walls, fiberglass elements have been used for many years now, especially in the presence of clay and incoherent soils. These elements can be used both to strengthen the excavation face and also as radial nailing elements. It is also known that fiberglass profiles are connected to the surrounding ground by cementing. In other words, each profile is buried in a cement mortar after having been inserted into an appropriate pre-bore made in the wall to be strengthened. The arrangement of the profiles, their length and their density (i.e. number per square meter) varies according to operating conditions. The fiberglass profiles usually have a solid transverse section or alternatively an axial cavity that is used for insertion of the cement mortar.

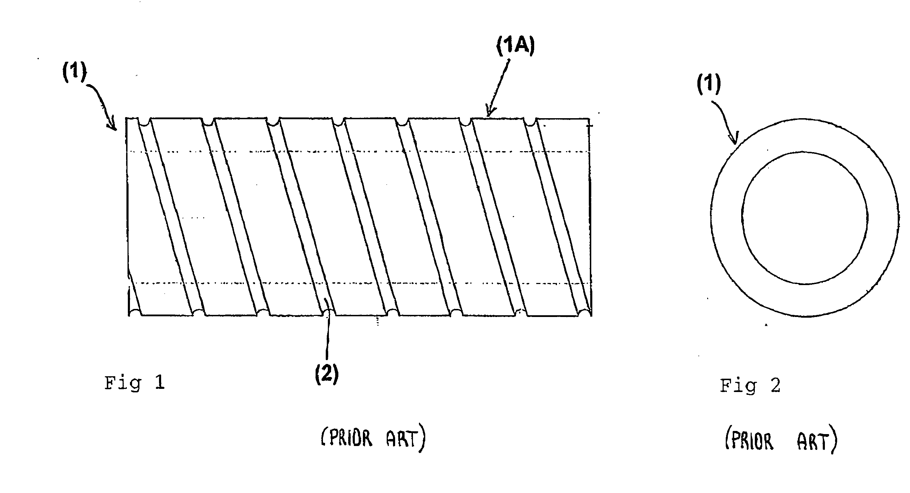

Figures 1 to 3 are relative to a conventionally used fiberglass profile (10). As shown, the profile has an internally hollow circular section with an outer diameter varying, in the majority of cases, from 55 to 70 millimeters. The profile (10) is usually produced through a pultrusion process during which the glass fiber, previously impregnated with a polymer base, passes through a heated die having circular shape. With reference to Fig. 1, at the end of the pultrusion process, the outer surface (1A) of the profile (1) is machined to improve its adhesion to the cement mortar. In particular, machining consists in producing a groove (2) by removing material through milling of the profile, cutting part of the longitudinal fibers forming the profile, reducing the resisting cross-section thereof. As shown, this groove extends in a spiral in a similar manner to a thread.

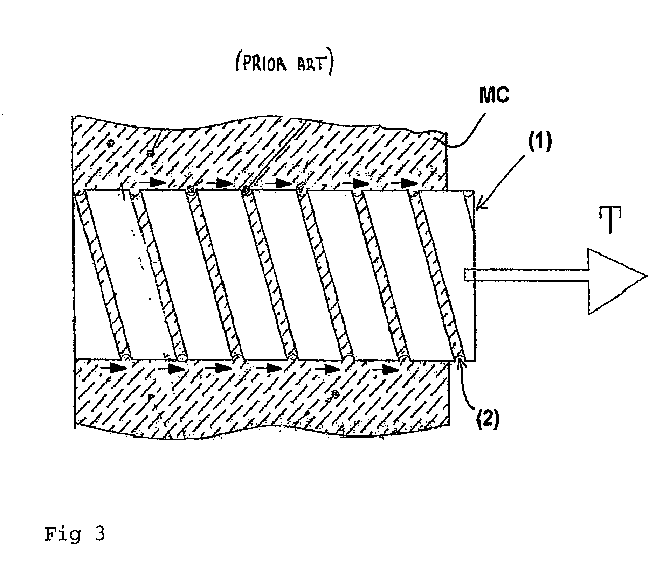

With reference to Fig. 3, during installation of the profile (10) the cement mortar (5) is inserted between the outer surface (1A) of the profile (1) and the pre-bore through valves or through other functionally equivalent elements. In the specific case of valves, these are positioned in longitudinal points of the profile. The cement mortar (MC) reaches the valves through pipes (not shown), which are positioned inside the longitudinal cavity (3) of the profile (1) to subsequently be distributed around the relative surface (1A), also occupying the spiral groove (2) as clearly shown in Fig. 3. During any tensile stress (T) on the profile, the cement mortar (MC) arranged in the groove (2) is subjected to a shearing action offering low resistance to pullout of the profile. The geometrical form of the profile (1) in fact causes a longitudinal interruption of the glass fibers positioned externally. These fibers are in practice substantially severed and therefore cannot contribute towards the tensile strength (TS). It has also been seen that due to the decrease of the resisting cross-section caused by the removal of material, fiberglass profiles currently used do not even offer an acceptable tensile strength.

Methods are also known wherein a metallic thread or web is wrapped around a profile made by fiberglass fibers which are subsequently polymerized. After the polymerization, the metallic thread of web is removed from the profile, leaving thereon a negative imprint which forms the corrugation of the profile. Such methods, according to the preamble of claim 1, are described for example in prior documents JP-57-18484, EP-0667228, EP-0733456. In these cases, the corrugation of the profile is not determined before the polymerization of the profile, but it derives from the imprint which is left by the metallic thread or web which must necessarily be removed after the polymerization process.

Therefore, the main aim of the present invention is to provide a new fiberglass profile and a new method for producing this profile which allows the aforesaid drawbacks to be overcome.

Within this aim a first object of the present invention is to provide a fiberglass profile which has a high pullout strength, greater than that achievable through conventional solutions.

Another object of the present invention is to provide a method for producing this fiberglass profile which includes a limited number of steps easily produced at competitive costs.

A further object of the present invention is to provide a profile and a method which are reliable and relatively easily implemented at competitive costs. One more aim of the present invention is to provide a plant that allows implementation of the method according to the present invention.

### SUMMARY OF THE INVENTION

The present invention therefore relates to a fiberglass profile to be used as reinforcing element for strengthening an excavation wall, for example in the field of producing galleries and/or tunnels. The profile according to the invention comprises an axially extending body formed by glass fibers anchored in a polymer resin through a polymerization process. The profile is characterized in that the outer surface has a corrugated trend, intended to indicate a substantially undulating trend with respect to an axial cross-sectional plane of the profile. In particular, this corrugated trend is defined by a different degree of compression of the outermost fibers of the profile. In practice, according to the invention the outermost glass fibers are compressed at axial intervals and maintain their integrity to maintain the resisting cross-section of the profile. It has been seen that the corrugated trend of the outer surface of the profile advantageously increases the pullout strength thereof as the cement mortar destined to surround the profile is subjected mainly to compression and no longer to shear, as is instead the case in conventional profiles.

The present invention also relates to a method for producing a fiberglass profile according to the present invention. The method provides for impregnation of the glass fibers with a polymer resin and subsequent orientation thereof according to an axial direction, arranging them so as to configure an axially extending profile. The method according to the invention provides for compression of the outermost glass fibers at axial intervals so as to impart a corrugated trend to the outer surface of the profile, i.e. an undulating trend considered with respect to an axial cross-sectional plane of the profile. The profile is subsequently subjected to a polymerization process that anchors the structure of the profile.

According to the invention, the outermost fibers are compressed through a thread-like compression element which can, for example, be formed of a thread made of polyester, glass fibers or other functionally equivalent material. The thread-like compression element can be removed following completion of the polymerization process or, more preferably and advantageously, it can remain incorporated and enclosed into the profile in the polymerization process. According to the invention, the compression of the outermost glass fibers of the profile is such that the outer surface (15b) of said profile and the thread-like compression element have together an overall corrugated shape which is substantially corresponding to the corrugated shape of the desired finished profile. In other words, the definition of the corrugated profile of the finished profile is already completed before the polymerization step and does not depend on the removal of the thread-like element after the polymerization. In this way, the entire manufacturing process of the profile becomes much simpler and faster than the processes of the known art.

According to the invention, the thread-like compression element is formed by a thread with circular section and is wound in a spiral, preferably with constant pitch, around the profile so that the outer surface has a sinusoidal trend, with respect to an axial cross-sectional plane. According to an alternative embodiment, the thread-like compression element has a concave section and is wound around the fiberglass profile substantially with zero pitch, that is, with a a pitch which is substantially comparable to the thickness of the thread-like element. Following compression, the outermost glass fibers are partially arranged in the cavity defined by the section of the thread-like element. In this manner, the corrugated trend is defined for the outer surface of the profile.

In the method of the present invention, the corrugated profile is entirely defined already before the polymerization, and therefore does not depend on the removal of the thread-like compression element after the polymerization.

The present invention also relates to a plant for implementing a method according to the present invention. The plant according to the invention comprises an impregnation tank containing a polymer resin through which the glass fibers are impregnated. The plant also comprises means for orientation and arrangement of the glass fibers so as to allow an orientation in axial direction of the fibers and an arrangement that configures an axial profile. The plant also comprises compression means to compress the outermost glass fibers of the profile at axial intervals so as to impart a corrugated trend to the surface. In particular, these compression means are operatively positioned upstream of appropriate polymerization means through which the polymerization process that anchors the glass fibers in the polymer resin is activated.

### BRIEF DESCRIPTION OF FIGURES

Further features and advantages of the present invention shall be apparent from the description of embodiments of a profile according to the present invention and of a relative method and plant for producing this profile, shown by way of nonlimiting example in the accompanying drawings, wherein:
- Fig. 1 is a side view of a portion of a profile in composite material currently used;
- Fig. 2 is a side view of the profile of Fig. 1;
- Fig. 3 is a view relative to an application of the profile of Figs 1 and 2;
- Fig. 4 is a longitudinal sectional view of a portion of a first embodiment of a profile according to the present invention;
- Fig. 5 is a further sectional view according to the line IV-IV of Fig. 4;
- Fig. 6 is a view relative to an application of the profile of Fig. 4;
- Fig. 7 is a longitudinal sectional view of a portion of a second embodiment of a profile according to the present invention;
- Fig. 8 is a cross-sectional view of the profile of Fig. 7;
- Fig. 9 is a view of a further embodiment of a profile according to the present invention;
- Fig. 10 is a schematic diagram of a plant for producing a profile according to the present invention.

### DETAILED DESCRIPTION

The profile according to the present invention is indicated hereunder with the reference number 15. This profile 15 has an axially extending body formed of glass fibers 15A, 15B aligned according to an axial direction X. More precisely, the glass fibers 15A, 15B are anchored in a polymer resin, preferably polyester, through a polymerization process. According to the invention, the outer surface 15B of the body 15 is compressed at longitudinal intervals so as to have a corrugated trend, i.e. a substantially undulating trend with respect to an axial cross-sectional plane of the profile 15, i.e. with respect to a cross-sectional plane containing the longitudinal axis. The corrugated trend of the surface 15B is defined by a different degree of compression of the outermost glass fibers 5B which are substantially compressed at axial intervals. More precisely, "compression" is intended as a crushing in substantially radial direction of the outer fibers 5B so that the outer surface 15B is formed by more compressed portions alternated with less compressed portions. The expression "radial direction" indicates a transverse direction substantially orthogonal to the axial direction X.

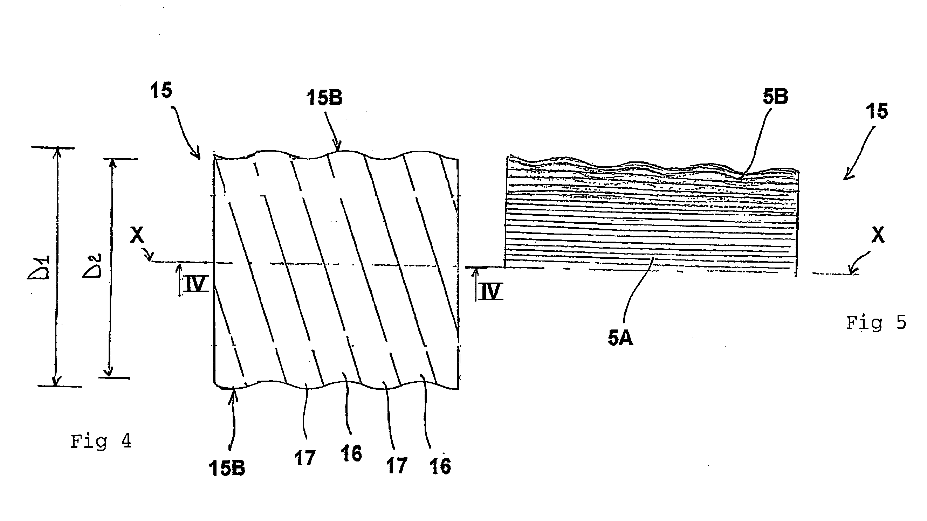

Fig. 4 is a sectional view relative to a portion of a profile 15 according to the present invention. Fig. 5 is instead a section produced along an axial cross-sectional plane and allows observation of the arrangement of the fibers 5A, 5B forming the profile 15. As evident, the innermost fibers 5A of the profile 15 are aligned parallel to the axial direction X and have an integral and continuous trend without longitudinal interruptions. The outermost fibers 5B are instead compressed at axial intervals, but without having longitudinal interruptions. In particular, compression of the outermost fibers 5B defines portions of the profile 15 at which it has a radial extension D1 and other portions in which it has a radial extension D2. The continuity of the outermost fibers 15B advantageously increases the tensile strength of the profile with respect to the strength offered by a conventional profile, such as the one shown in Fig. 1. In other words, unlike the conventional solutions, the outermost fibers 5B of the profile 15 are not longitudinally interrupted or severed, but are only compressed.

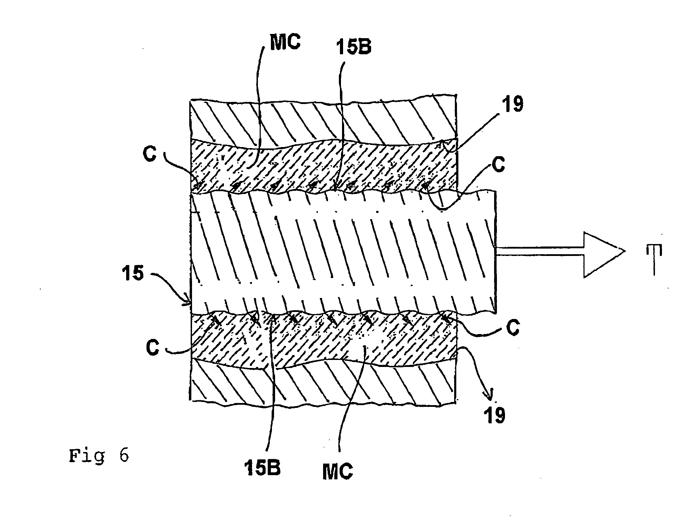

Fig. 6 is a view relative to a possible application of the profile 15. More precisely, this figure refers to a possible installation of the profile 15 inserted in a pre-bore produced in an excavation wall to be strengthened. The volume of space between the profile 15 and the surface 19 of the pre-bore is filled with cement mortar MC. The external structure of the surface 15B ensures that, during application of tensile stress T on the profile 15, the cement mortar MC is mainly subjected to compressive stresses (indicated by the arrows with reference C) and not to shear stresses as occurs in conventional solutions (see Fig. 3). Through the cement mortar, these compressive stresses are transferred directly to the internal wall of the pre-bore. Consequently, the pullout strength of the profile 15 is advantageously increased as cement mortars MC on the one hand have excellent compressive strength properties and on the other hand they transfer compressive stresses to the surrounding ground. Laboratory tests have shown that with the same section and radial dimension, the pullout strength of the profile 15 according to the invention is over 40% greater than that of conventional profiles having the structure shown in Figs. 1 to 3. Pullout strength is intended in practice as the tensile stress T which must be applied to the profile in order to pull it out of a containment wall in which it has previously been cemented.

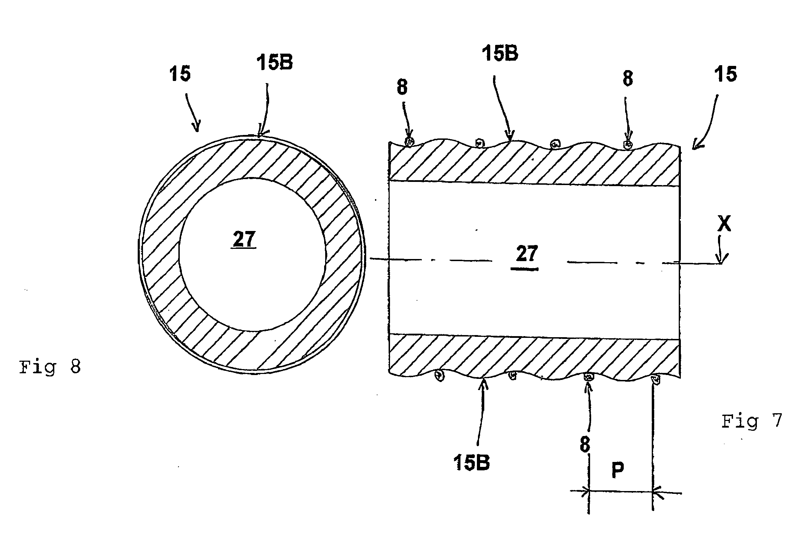

With reference once again to Fig. 4, it can be observed that the outer surface 15B of the profile 15 has quite a regularly corrugated trend and precisely a sinusoidal trend with respect to an axial cross-sectional plane. More precisely, the outer surface 15B preferably has a concave portion 16 (in practice wishing to indicate a more compressed portion) and a convex portion 17 (i.e. a less compressed portion) which extend in a spiral alternating in axial direction X. As better specified hereunder, this structure can be obtained, for example, by winding a thread-like compression element 8 in a spiral with a constant spiral pitch, during formation of the profile 15 and in particular before the polymerization process through which the glass fibers 5A, 5B are anchored to the polymer resin. Figs. 7 to 9 are relative to a second embodiment of the profile 15 according to the present invention which differs to the one in Figs. 4 to 6 due to the different transverse section of the profile 15, in which the term "transverse" indicates a section according to a plane substantially orthogonal to the axial direction X. In this second solution, the profile 15 has a cavity 27 with a substantially circular section which extends axially preferably for the entire length of the profile. This cavity 27 has the function of allowing the passage of pipes (not shown) conveying the cement mortar MC.

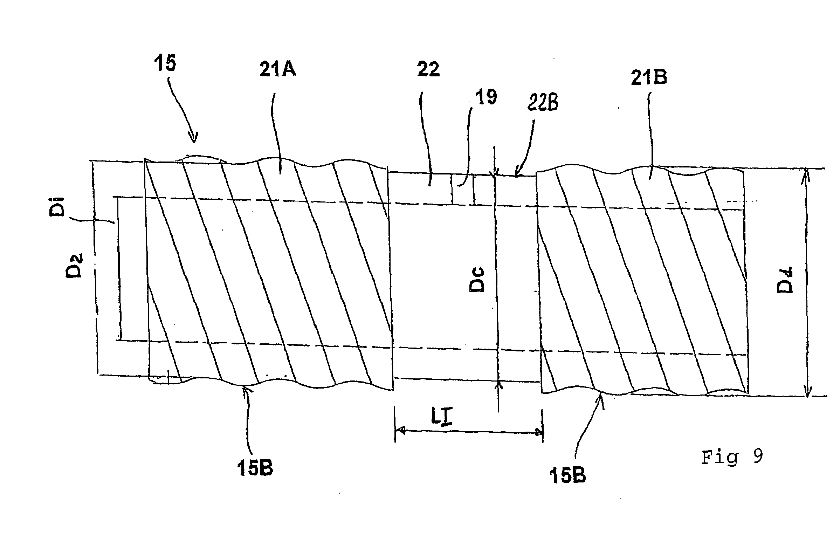

In this regard, Fig. 9 shows a second portion of a profile 15 relative to this second embodiment. More precisely, this second portion comprises a first part 21A and a second part 21 B which have an outer surface 15B corresponding to the one shown in Figs. 7 and 8. An intermediate part 22 is defined between the two parts 21A, 21 B for positioning of feed valves (not shown) of the mortar MC that is conveyed to these valves through the pipes (not shown) positioned operatively along the axial cavity 17. As shown, the intermediate part 22 has a substantially cylindrical outer surface, i.e. which does not have a corrugated trend characteristic of the other parts of the profile 15. A radial passage 19 is provided to allow the mortar MC to pass from the inside of the axial cavity 27 to the outside of the profile 15.

The present invention also relates to a method for producing a profile according to the present invention. More precisely, the method can be used both to produce a profile with solid section, such as the one shown in Figs. 4 to 6, and a profile provided with an axial cavity 27, such as the one relative to Figs. 7 to 9.

The method according to the invention provides for impregnation of the glass fibers 5A, 5B with a polymer resin, preferably polyester. The fibers 5A, 5B are oriented, preferably under the action of tensile stress, according to an axial direction X and are mutually arranged so as to configure a profile 15 extending substantially axially. The method according to the invention therefore provides for compression of the outermost glass fibers 5B of the profile 15 at axial intervals so as to impart a corrugated trend to the outer surface 15B, wishing to indicate a substantially undulating trend with respect to an axial cross-sectional plane, such as the plane IV-IV indicated in Fig. 4. Axial cross-sectional plane is intended in substance as a plane belonging to the bundle of planes having the axis X as center.

More precisely, this compression of the outer surface 15B, is implemented during traction and therefore axial advance of the profile 15. Subsequently, the profile 15 is subjected to a polymerization process through which the glass fibers 5A, 5B of which the profile is composed are anchored in position and shape in the polymer resin.

Unlike conventional pultrusion processes, the final shape of the profile 15 is therefore established before and not after the polymerization step. In particular, the undulating shape of the outer surface 15B is imparted through a compression of the outermost fibers 5B without any longitudinal interruption thereof. In other words, the outer fibers 5B maintain an integral and continuous structure for their entire relative longitudinal extension.

Therefore the undulating shape of the outer surface 15B does not depend on whether the compression element which is used before the polymerization to compress the fibers is removed or not, so that it can advantageously remain incorporated to the profile even after the polymerization so as to constitute an integral part thereof.

According to the invention, the outermost glass fibers 5B are radially compressed through a thread-like compression element 8 (shown in Fig. 7) which is wound in a spiral around the outer surface 15B of the profile 15. The expression "thread-like compression element" generically indicates an element which can be wound around the profile in the same way as a thread, a tape or other similar articles so as to generate a compressing action. The thread-like compression element can be made of metal or non-metallic material. In the second case, it could be made, for example, of polyester or glass fibers. Other types of material could nonetheless be used. Moreover, the thread-like compression element can have a circular transverse section (as in the case of a thread) shaped or alternatively also polygonal. According to a first embodiment of the method according to the invention, the thread-like element 8 is in the form of a thread with a solid circular section and is wound with a substantially constant spiral pitch P so that the outer surface 15B has a regular trend along substantially the entire longitudinal extension, as can be seen in Fig. 7. This thread remains wound around the profile 15 during the polymerization process thereof in order to maintain the undulating structure imparted to the outer surface 15B. Through the polymerization process, the glass fibers 5A, 5B are anchored permanently in the polymer resin, in practice occupying the position previously imposed by the tension of the thread-like compression element 8. At the end of the polymerization process, the thread-like compression element 8 can be separated from the outer surface 15B, but more advantageously it remains incorporated to the polymerized profile.

According to a further embodiment of the method according to the invention, the thread-like compression element 8 has a concave transverse section, for example semi-circular, and is wound around the profile 15 with substantially zero spiral pitch, that is, substantially comparable to the thickness of the thread-like element. In particular, the thread-like element 8 is wound so that the semi-circumference is facing the outer fibers of the profile 15. Following this winding and subsequent polymerization, the outermost glass fibers 5B are partially arranged in the semi-circumferential concavity so as to define the corrugated trend for the outer surface 15B of the profile 15. At the end of the polymerization process the thread-like element 8 can be separated from the profile 15 so as to "free" the outer surface 15B or, more preferably, it can remain incorporated into the polymerized profile, so as to render the process even simpler and cheaper.

The method according to the invention thus also allows a profile with hollow axial section as shown in Figs. 7 and 8 to be obtained. In this case the method provides for the use of a cylindrical core around which the longitudinal fibers 5A, 5B are oriented and arranged before compression of the outermost fibers 5B, i.e. before the polymerization process. The diameter of the cylindrical core in practice establishes the diameter Di of the axial cavity 27 of the profile 15 (Fig. 9).

From the operational viewpoint, once the glass fibers 5A, 5B are impregnated, they are oriented according to the axial direction X and arranged around the cylindrical core (not shown). Subsequently, the outermost fibers 5B are compressed, preferably through spiral winding of the thread-like element 8 as described above. In this manner, the profile 15 extends coaxially to the cylindrical core which can also offer advantageous support to the axial movement of the profile. Subsequent to the polymerization process and to any separation of the thread-like compression element 8 from the profile 15, the latter is removed from the cylindrical core to allow subsequent use thereof.

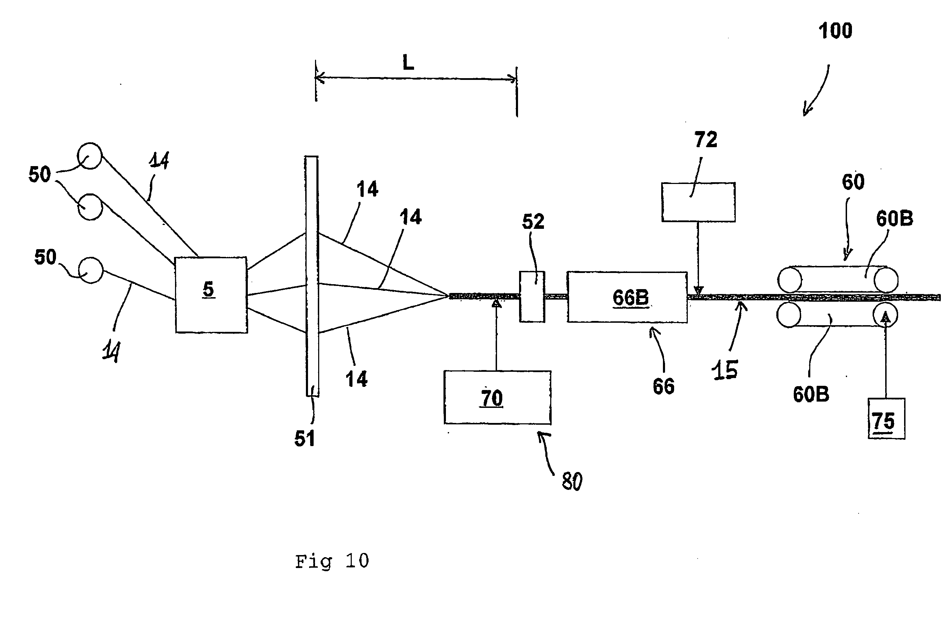

The method according to the invention can also be used to obtain the configuration of the profile shown in Fig. 9 for which an intermediate portion 22 is provided between two parts 21A, 21 B having an undulating outer surface 15B. In particular, this intermediate portion 22 has a cylindrical or in any case non-undulating outer surface 22B. In order to obtain this surface, the method once again allows the use of a thread-like compression element 8 in the form of a thread with a solid circular section which is wound around the fiber 5A, 5B with a substantially zero winding pitch, that is substantially comparable to the thickness of the thread-like element itself, for the length LI of the intermediate portion 22. The present invention also relates to a plant 100 for producing a profile 15 made of glass fibers 5A, 5B according to the present invention. In this regard, Fig. 10 is a schematic view relative to a plant 100 through which the method for producing a fiberglass profile 15 can be implemented according to what is indicated above. The plant according to the invention 100 comprises an impregnation tank 5 containing a polymer resin with which the glass fibers 5A, 5B destined to form the profile 15 are impregnated. In particular, due to their diameter (in the order of tens of millimeter) the glass fibers 5A, 5B are collected in filaments 14 before reaching the impregnation tank 5. Each of these filaments 14 is in practice composed of a group of glass fibers. The filaments are predisposed in feed reels 50 which feed the plant 100.

This plant comprises orientation and arrangement means 51, 52 to orient the filaments 14 of glass fibers 5A, 5B according to an axial direction X so as to configure an axially extending profile 15. The plant 100 also comprises pulling means 60 to pull the profile 15 along a pulling direction substantially parallel to the axial direction X. Through the pulling means 60, the profile 15 made of glass fibers 5A, 5B is advantageously produced according to a "continuous" process.

The plant 100 also comprises polymerization means 66 predisposed to activate the polymerization process to anchor the structure of the profile 15. In particular, these polymerization means 66, in substance formed by a polymerization oven 66B, are configured to heat the profile 15 to the correct polymerization temperature. This heating takes place through the passage of the profile 15 in the polymerization oven 66B due to the pulling imparted by the pulling means 60 positioned downstream of the oven.

The plant 100 according to the invention is characterized in that it comprises compression means 80 of the outermost fibers 5B of the profile 15. These means are positioned between the impregnation tank 5 and the polymerization oven 66. The compression means 80 act on the outermost fibers 5B of the profile so as to shape the outer surface 15B of the profile 15 according to the configuration and the objects described above. These compression means 80 preferably comprise a winding unit 70 through which a thread-like compression element 8 is wound around the surface 15B of the profile 15. The winding unit 70 is regulated so that winding of this thread-like element 8 takes place according to a substantially spiral trend with a constant pitch P. Operation of the winding unit 70, in terms of winding speed, is regulated as a function of the pulling speed of the profile 15 by the pulling means 60. In practice, extension of the spiral pitch P is defined by combining the feed speed of the profile 15 with the winding speed of the thread-like compression element 8. Through this regulation it is possible, for example, to obtain the structure of the profile 15 shown in Fig. 9. In this regard, to produce the non-undulating surface 22B of the intermediate portion 22 the pulling speed is reduced and the winding speed of the thread-like compression element 8 is increased (or at most remains unchanged). In this manner the thread can wind with a spiral pitch substantially close to zero so that the outer fibers 5B are compressed to the diameter DC indicated in Fig. 9.

The pulling speed of the profile 15 is regulated through an encoder 75 or functionally equivalent means. The pulling means 60 can be those normally used in conventional pultrusion processes, such as a pair of pulling belts 60B arranged on opposite sides of the profile 15 to exert thereon a combined and balanced traction action.

With reference to the case above, it is observed that in the case in which a thread-like compression element 8 with concave transverse section is used, wound with substantially zero spiral pitch, then the polymerization means 66 can also comprise a heated die (or mold) of the type normally used in conventional pultrusion processes.

With reference to the schematic view of Fig. 10, in a possible embodiment the orientation and arrangement means 51, 52 of the glass fibers 5A, 5B comprise a first guide element 51 and a second guide element 52 arranged respectively downstream of the impregnation tank 5 and upstream of the polymerization oven 66B. In particular, the first guide element 51 has the function of placing the filaments 14, composed of glass fibers, under tension and of orienting them towards the second guide element 52. In a possible embodiment the first guide element 51 is formed by a plate provided with holes through which the filaments 14 are made to pass. In particular, this plate also performs a skimming function in order to eliminate any excess resin collected by the filaments 14 in the impregnation tank 5.

As indicated above, the second guide element 52 is operatively positioned upstream of the polymerization oven 66B and immediately downstream of the compression means 80 through which the thread-like compression element 8 is wound around the profile 15. In this regard, it is observed that the longitudinal distance L between the first 51 and the second guide element 52 is selected so that the filaments 14 are already substantially oriented according to the axial direction X or according to the pulling direction. From a constructional viewpoint, the second guide element 52 can be composed of a cylinder through which the profile 15 is made to pass so as to continue to guide it towards the polymerization oven 66B.

In order to obtain the fiberglass profile shown in Figs. 7 to 9, the plant according to the invention can be provided with a cylindrical core to support and pull the profile 15. In accordance with what is indicated above in relation to the method of embodiment, in this case the filaments 14 made of glass fibers 5A, 5B are arranged around the preferably metallic cylindrical core, the main function of which is substantially to define the axial cavity 27 of the profile 15. However, the cylindrical core also has the function of allowing pulling of the profile 15 during the initial forming step thereof. In practice, the pulling means 60 initially pull the cylindrical core in axial direction X to then perform their traction action directly on the profile 15.

Again with reference to the schematic diagram of Fig. 10, removal means 72 of the thread-like compression element 8 are operatively positioned downstream of the polymerization oven 66B. These means are configured so as to separate the thread-like element 8 continuously during pulling of the profile along the pulling direction.

In a preferred variation, the plant has no removal means 72, because the thread-like element 8 can advantageously remain incorporated to the profile after its polymerization.

The technical solutions adopted for the profile and for the method and the plant for producing said profile allow the aim and the aforesaid objects to be fully achieved. In particular, the profile according to the invention has a greater pullout strength than that of conventional technical solutions. The method according to the invention allows the profile to be produced through a limited number of operations and with competitive costs with respect to the processes conventionally used. The profile, the method and the plant thus conceived are susceptible to numerous modifications and variants, all falling within the scope of the inventive concept; moreover all details can be replaced by other technically equivalent details.

In practice, the materials used and the contingent dimensions and forms can be any, according to requirements and to the state of the art.

## Claims

1. A method for producing a profile (15) made of glass fibers (5A, 5B) to be used for strengthening an excavation wall, said method comprising the steps of:
impregnating said glass fibers (5A,5B) with a polymer resin;
- orienting said glass fibers (5A,5B) according to a longitudinal direction and arranging these fibers so as to configure an axially extending profile (15);
- compressing the outermost glass fibers (5B) of said profile (15) at axial intervals through a substantially thread-like compression element (8) so as to impart a corrugated shape, substantially corresponding to the corrugated shape of the finished profile, to the combination of the outer surface (15B) of said profile (15) and the thread-like compression element;
- subjecting said profile (15) to a polymerization process, **characterized by** said outer surface (15B) of said profile (15) having a sinusoidal shape with respect to an axial cross-sectional plane.

2. The method according to claim 1. wherein said glass fibers (5A, 5B) are arranged around a cylindrical core so as to configure said axially extending profile (15), said profile (15) being removed from said cylindrical core following said polymerization process.

3. The method according to claim 1 or 2, wherein the thread-like compression element (8) is wound in a spiral around said profile (15).

4. The method according to claim 3, wherein said thread-like compression element (8) is wound with a substantially constant spiral pitch.

5. The method according to claim 3, wherein said thread-like compression element (8) is wound with a substantially constant spiral pitch for a first predetermined axial length of said profile and with a spiral pitch substantially comparable to the thickness of the thread-like element for a second predetermined axial length.

6. The method according to one or more of the preceding claims, wherein said thread-like compression element (8) is a non-metallic thread.

7. The method according to one or more of the preceding claims, wherein the substantially thread-like compression element (8) remains incorporated into the profile (15) after the polymerization process.

8. A plant (100) for producing a profile (15) made of glass fibers (5A, 5B) to be used as reinforcing elements for strengthening an excavation wall, said plant (100) comprising
- at least one impregnation tank (5) for impregnating said glass fibers (5A, 58) with a polymer resin;
- orientation and arrangement means (51, 52) of said glass fibers (5A, 5B) to orient them according to said axial direction X and to arrange them so as to configure a substantially axially extending profile (15);
- compression means (80) comprising a substantially thread-like compression element (8) to compress the outermost glass fibers (5B) of said profile (15) at axial intervals so as to impart a corrugated shape, substantially corresponding to the corrugated shape of the finished profile, to the combination of the outer surface (15B) of said profile (15) and the thread-like compression element;
- polymerization means to polymerize said profile; **characterized by** said outer surface (15B) of said profile (15) having a sinusoidal shape with respect to an axial cross-sectional plane.

9. The plant (100) according to claim 8, wherein said plant comprises pulling means (60) to pull said profile (15) in axial direction.

10. The plant according to claim 8 or 9, wherein said compression means (80) comprise a winding unit (70) to wind a thread-like compression element (8) in a spiral around said profile (15).

11. The plant (100) according to claim 10, wherein said winding unit (70) is regulated so that said winding is performed with a constant spiral pitch.

12. The plant (100) according to claim 11, wherein the winding speed of said thread-like compression element (8) around said profile (15) is regulated as a function of the axial pulling speed established by said pulling means.

13. A profile (15) made of glass fibers (5A, 5B) for strengthening an excavation wall, said profile (15) comprising an axially extending body formed by said glass fibers (5A, 5B) anchored in a polymer resin through a polymerization process, said profile (15) having an outer surface (15B) with a corrugated shape with respect to an axial cross-sectional plane of said profile (15), said corrugated shape being defined by a different degree of compression of the outermost glass fibers (5B) of said profile (15), obtained by means of a substantially thread-like compression element (8),
**characterised in that** said outer surface (15B) of said profile (15) has a sinusoidal shape with respect to an axial cross-sectional plane.

14. The profile (15) according to claim 13, wherein said outer surface (15B) has a corrugated shape defined by a concave portion (16) and by a convex portion (17) which extend in a spiral alternating in axial direction.

15. The profile (15) according to any one of claims 13 to 14, wherein the substantially thread-like compression element (8) is incorporated to the profile (15).

## Patentansprüche

1. Verfahren zur Herstellung eines Profils (15) aus Glasfasern (5A, 5B) zum Verstärken einer Baugrubenwand, wobei das Verfahren die Schritte umfasst:
- Imprägnieren der Glasfasern (5A, 5B) mit einem Polymerharz;
- Ausrichten der Glasfasern (5A, 5B) entlang einer longitudinalen Richtung und Anordnen dieser Fasern, um ein sich axial erstreckendes Profil (15) zu bilden;
- Komprimieren der äußersten Glasfasern (5B) des Profils (15) in axialen Abständen durch ein im Wesentlichen fadenförmiges Kompressionselement (8), um der Kombination aus der äußeren Oberfläche (15B) des Profils (15) und dem fadenförmigen Kompressionselement eine gewellte Form zu verleihen, die im Wesentlichen der gewellten Form des fertigen Profils entspricht;
- Unterwerfen des Profils (15) eines Polymerisationsprozesses,
**dadurch gekennzeichnet, dass**
die äußere Oberfläche (15B) des Profils (15) eine sinusartige Form bezüglich einer axialen Querschnittsebene aufweist.

2. Verfahren nach Anspruch 1, **dadurch gekennzeichnet, dass** die Glasfasern (5A, 5B) um einen zylindrischen Kern angeordnet sind, um das sich axial erstreckende Profil zu bilden, wobei das Profil (15) nach dem Polymerisationsprozess von dem zylindrischen Kern entfernt wird.

3. Verfahren nach Anspruch 1 oder 2, **dadurch gekennzeichnet, dass** das fadenförmige Kompressionselement (8) spiralförmig um das Profil (15) gewickelt wird.

4. Verfahren nach Anspruch 3, **dadurch gekennzeichnet, dass** das fadenförmige Kompressionselement (8) mit im Wesentlichen konstanter Ganghöhe gewunden wird.

5. Verfahren nach Anspruch 3, **dadurch gekennzeichnet, dass** das fadenförmige Kompressionselement (8) für eine erste vorbestimmte axiale Länge mit einer im Wesentlichen konstanten Ganghöhe gewunden wird und für eine zweite vorbestimmte axiale Länge mit einer Ganghöhe, die im Wesentlichen vergleichbar mit der Dicke des fadenförmigen Elements ist.

6. Verfahren nach einem der vorherigen Ansprüche, **dadurch gekennzeichnet, dass** das fadenförmige Kompressionselement (8) ein nichtmetallischer Faden ist.

7. Verfahren nach einem oder mehreren der vorherigen Ansprüche, **dadurch gekennzeichnet, dass** das im Wesentlichen fadenförmige Kompressionselement (8) nach dem Polymerisationsprozess in dem Profil (15) eingeschlossen bleibt.

8. Vorrichtung (100) zur Herstellung eines Profils (15) aus Glasfasern (5A, 5B) zur Benutzung als Verstärkungselement zur Verstärkung einer Baugrubenwand, wobei die Vorrichtung (100) umfasst:
- mindestens ein Imprägnationsbecken (5) zur Imprägnation der Glasfasern (5A, 5B) mit einem Polymerharz;
- Ausrichtungs- und Anordnungsmittel (51, 52) zur Ausrichtung der Glasfasern (5A, 5B) entlang der axialen Richtung X und zur Anordnung der Glasfasern, um ein im Wesentlichen sich axial erstreckendes Profil (15) zu bilden;
- Kompressionsmittel (80) umfassend ein im Wesentlichen fadenförmiges Kompressionselement (8), um die äußersten Glasfasern (5B) des Profils (15) in axialen Abständen zu komprimieren, um der Kombination aus der äußeren Oberfläche (15B) des Profils (15) und dem fadenförmigen Kompressionselement (8) eine gewellte Form zu verleihen, die im Wesentlichen der gewellten Form des fertigen Profils entspricht;
- Polymerisationsmittel zur Polymerisation des Profils,
**dadurch gekennzeichnet, dass**
die äußere Oberfläche (15B) des Profils (15) eine sinusartige Form bezüglich einer axialen Querschnittsebene hat.

9. Vorrichtung (100) nach Anspruch 8, **dadurch gekennzeichnet, dass** die Vorrichtung Zugmittel (60) umfasst, um das Profil (15) in axiale Richtung zu ziehen.

10. Vorrichtung (100) nach Anspruch 8 oder 9, **dadurch gekennzeichnet, dass** die Kompressionsmittel (80) eine Wicklungseinheit (70) aufweist, um das fadenförmige Kompressionselement (8) in einer Spirale um das Profil (15) zu wickeln.

11. Vorrichtung (100) nach Anspruch 10, **dadurch gekennzeichnet, dass** die Wicklungseinheit (70) so eingestellt ist, dass das Wickeln mit einer konstanten Ganghöhe erfolgt.

12. Vorrichtung (100) nach Anspruch 11, **dadurch gekennzeichnet, dass** die Wicklungsgeschwindigkeit des fadenförmigen Kompressionselements (8) um das Profil (15) in Abhängigkeit von der axialen Zuggeschwindigkeit, die durch das Zugmittel vorgegeben ist, gesteuert wird.

13. Profil (15) aus Glasfasern (5A, 5B) zur Verstärkung einer Baugrubenwand, wobei das Profil (15) einen sich axial erstreckenden Körper umfasst, der von den Glasfasern (5A, 5B) gebildet ist, die in einem Polymerharz durch einen Polymerisationsprozess verankert sind, wobei das Profil (15) eine äußere Oberfläche (15B) mit einer bezüglich einer axialen Querschnittsebene des Profils (15) gewellten Form aufweist, wobei die gewellte Form durch einen unterschiedlichen Kompressionsgrad der äußersten Glasfasern (5B) des Profils (15) definiert ist und durch ein im Wesentlichen fadenförmiges Kompressionselement (8) erhalten wird, **dadurch gekennzeichnet, dass** die äußere Oberfläche (15B) des Profils (15) eine sinusartige Form bezüglich einer axialen Querschnittsebene aufweist

14. Profil (15) nach Anspruch 13, **dadurch gekennzeichnet, dass** die äußere Oberfläche (15B) eine gewellte Form aufweist, die durch einen konkaven Abschnitt (16) und einen konvexen Abschnitt (17) definiert ist, die sich in einer Spirale abwechselnd in axialer Richtung erstrecken.

15. Profil (15) nach Anspruch 13 oder 14, **dadurch gekennzeichnet, dass** das im Wesentlichen fadenförmige Kompressionselement (8) in dem Profil (15) eingeschlossen ist.

## Revendications

1. Procédé de fabrication d'un profilé (15) fait en fibres de verre (5A, 5B) destiné à être utilisé pour renforcer une paroi d'excavation, le procédé comprenant les étapes suivantes :
- imprégner les fibres de verre (5A, 5B) avec une résine polymère ;
- orienter les fibres de verre (5A, 5B) selon un sens longitudinal et agencer ces fibres de façon à configurer un profilé (15) s'étendant axialement ;
- comprimer les fibres de verre (5B) les plus extérieures du profilé (15) à des intervalles axiaux par un élément de compression semblable à un fil (8) de façon à leur donner une forme ondulée, correspondant essentiellement à la forme ondulée du profilé fini, à la combinaison de la surface extérieure (15B) du profilé (15) et de l'élément de compression semblable à un fil ;
- soumettre le profilé (15) à un procédé de polymérisation, **caractérisé en ce que** la surface extérieure (15B) du profilé (15) a une forme sinusoïdale par rapport à un plan transversal axial.

2. Procédé selon la revendication 1, dans lequel les fibres de verre (5A, 5B) sont agencées autour d'un noyau cylindrique de façon à configurer le profilé (15) s'étendant axialement, le profilé (15) étant retiré du noyau cylindrique à la suite du procédé de polymérisation.

3. Procédé selon la revendication 1 ou 2, dans lequel l'élément de compression semblable à un fil (8) est enroulé en spirale autour du profilé (15).

4. Procédé selon la revendication 3, dans lequel l'élément de compression semblable à un fil (8) est enroulé avec un pas de spirale essentiellement constant.

5. Procédé selon la revendication 3, dans lequel l'élément de compression semblable à un fil (8) est enroulé avec un pas de spirale essentiellement constant pour une première longueur axiale prédéterminée du profilé et avec un pas de spirale essentiellement comparable à l'épaisseur de l'élément de compression semblable à un fil pour une deuxième longueur axiale prédéterminée.

6. Procédé selon l'une ou plusieurs des revendications précédentes, dans lequel l'élément de compression semblable à un fil (8) est un fil non métallique.

7. Procédé selon l'une ou plusieurs des revendications précédentes, dans lequel l'élément de compression (8) essentiellement semblable à un fil reste incorporé dans le profilé (15) après le procédé de polymérisation.

8. Installation (100) pour fabriquer un profilé (15) fait en fibres de verre (5A, 5B) destiné à être utilisé en tant qu'élément de renfort pour renforcer une paroi d'excavation, l'installation (100) comprenant :
- au moins une cuve d'imprégnation (5) pour imprégner les fibres de verre (5A, 5B) avec une résine polymère ;
- des moyens d'orientation et d'agencement (51, 52) des fibres de verre (5A, 5B) pour les orienter selon le sens axial X et les agencer de façon à configurer un profilé (15) s'étendant essentiellement axialement ;
- un moyen de compression (80) comprenant un élément de compression essentiellement semblable à un fil (8) pour comprimer les fibres de verre (5B) les plus extérieures du profilé (15) à des intervalles axiaux de façon à leur donner une forme ondulée, correspondant essentiellement à la forme ondulée du profilé fini, à la combinaison de la surface extérieure (15B) du profilé (15) et de l'élément de compression semblable à un fil ;
- un moyen de polymérisation pour polymériser le profilé ; **caractérisé en ce que** la surface extérieure (15B) du profilé (15) a une forme sinusoïdale par rapport à un plan transversal axial.

9. Installation (100) selon la revendication 8, dans laquelle l'installation comprend un moyen de traction (60) pour tirer le profilé (15) dans le sens axial.

10. Installation selon la revendication 8 ou 9, dans laquelle le moyen de compression (80) comprend une unité d'enroulement (70) pour enrouler un élément de compression semblable à un fil (8) en spirale autour du profilé (15).

11. Installation (100) selon la revendication 10, dans laquelle l'unité d'enroulement (70) est régulée de façon à ce que l'enroulement soit effectué avec un pas de spirale constant.

12. Installation (100) selon la revendication 11, dans laquelle la vitesse d'enroulement de l'élément de compression semblable à un fil (8) autour du profilé (15) est régulée en fonction de la vitesse de traction axiale établie par le moyen de traction.

13. Profilé (15) fabriqué en fibres de verre (5A, 5B) pour renforcer une paroi d'excavation, le profilé (15) comprenant un corps s'étendant axialement formé par les fibres de verre (5A, 5B) ancrées dans une résine polymère par un procédé de polymérisation, le profilé (15) présentant une surface extérieure (15B) avec une forme ondulée par rapport à un plan transversal axial du profilé (15), la forme ondulée étant définie par un degré différent de compression des fibres de verre (5B) les plus extérieures du profilé (15), obtenue au moyen d'un élément de compression (8) essentiellement semblable à un fil, **caractérisé en ce que** la surface extérieure (15B) du profilé (15) a une forme sinusoïdale par rapport à un plan transversal axial.

14. Profilé (15) selon la revendication 13, dans lequel la surface extérieure (15B) a une forme ondulée définie par une partie concave (16) et une partie convexe (17) qui s'étendent en une spirale alternant dans le sens radial.

15. Profilé (15) selon l'une quelconque des revendications 13 à 14, dans lequel l'élément de compression (8) essentiellement semblable à un fil est incorporé au profilé (15).
